# EUROPÄISCHE PATENTSCHRIFT

(11) **EP 3 590 160 B1**
(45) Veröffentlichungstag und Bekanntmachung des Hinweises auf die Patenterteilung: **01.05.2024**
(21) Anmeldenummer: 18712091.0
(22) Anmeldetag: 02.03.2018
(51) Int. Cl.: H01S 3/23, H01S 3/13

(54) **SCHNELLE MODULATION VON LASERSTRAHLUNG HOHER LEISTUNG**
RAPID MODULATION OF HIGH-POWER LASER RADIATION
MODULATION RAPIDE DE RAYONNEMENT LASER DE FORTE PUISSANCE

(30) Priorität: 02.03.2017 DE 102017104392
(43) Veröffentlichungstag der Anmeldung: 08.01.2020
(73) Patentinhaber: Active Fiber Systems GmbH, 07745 Jena (DE)
(72) Erfinder: EIDAM, Tino, 07751 Jena (DE); LIMPERT, Bettina, 07751 Jena (DE)
(74) Vertreter: Schneiders & Behrendt Bochum
(86) Internationale Anmeldenummer: PCT/EP2018/055218
(87) Internationale Veröffentlichungsnummer: WO 2018/158448

(56) Entgegenhaltungen:
- US-A- 5 424 863
- US-A1- 2004 179 764
- BRIAN ANDERSON ET AL: "Comparison of phase modulation schemes for coherently combined fiber amplifiers", OPTICS EXPRESS, Bd. 23, Nr. 21, 19. Oktober 2015 (2015-10-19), Seite 27046, XP055477099, ISSN: 2161-2072, DOI: 10.1364/OE.23.027046
- Brian Anderson ET AL: "Comparison of phase modulation schemes for coherently combined fiber amplifiers", Optics Express, vol. 23, no. 21, 19 October 2015 (2015-10-19), page 27046, XP055477099, US ISSN: 2161-2072, DOI: 10.1364/OE.23.027046

## Beschreibung

Die Erfindung betrifft ein Verfahren zur Amplitudenmodulation von Laserstrahlung nach dem Oberbegriff von Anspruch 1.

Außerdem betrifft die Erfindung eine Vorrichtung zur Durchführung des Verfahrens.

Kurzpulslaser haben sich in den letzten Jahren als vielfältig einsetzbare Werkzeuge in der hochpräzisen Materialbearbeitung etabliert. Dabei zeigen ultrakurze Laserpulse (mit einer Pulsdauer < 10 ps) Vorteile gegenüber längeren Laserpulsen (mit einer Pulsdauer im Bereich einiger Nanosekunden) aufgrund eines geringeren Wärmeeintrages in das Werkstück (so genannte kalte Ablation). Die Geschwindigkeit der Bearbeitung ist bestimmt durch die Pulsfrequenz des Lasers. Um eine kosteneffiziente Materialbearbeitung zu erlauben, wurden in den letzten Jahren hochrepetierende Lasersysteme entwickelt. Bei gegebener Pulsenergie bedeutet dies eine ebenso gesteigerte mittlere Leistung.

Eine Vielzahl von Applikationen in der Materialbearbeitung erfordert, dass Laserpulse oder auch ganze Pulszüge eines gepulsten Lasersystems gezielt deaktiviert werden müssen oder ein kontinuierliches Lasersignal möglichst schnell in seiner Leistung geändert werden muss. Ein solcher Anwendungsfall kann z.B. vorliegen, wenn durch einen Bearbeitungsscanner, der den Ort des Fokus eines Laserstrahls steuert, eine Bewegung des Strahls zwischen zwei Punkten erfolgen soll, ohne dass während der Bewegung Laserstrahlung auf die zu bearbeitende Oberfläche des Werkstücks trifft.

Werden Pulsfrequenzen im kHz-Bereich genutzt (Zeitabstand zwischen den Laserpulsen im Bereich µs-ms), existieren eine Reihe von Modulationstechniken im Stand der Technik, um den Laserstrahl zu deaktivieren bzw. wieder zu reaktivieren bzw. in seiner Leistung wesentlich zu verändern. Dazu zählen neben mechanischen Schaltmethoden auch elektro-optische, akusto-optische und optisch-optische Schalter (siehe W. Koechner, "Solid State Laser Engineering", Springer, New York, 2006, 6. Ausgabe).

Technisch deutlich anspruchsvoller sind Fälle, in denen zwischen zwei Laserpulsen eines hochfrequent repetierenden Lasersystems (Pulsfrequenz >> 1 MHz, Zeitabstand zwischen Laserpulsen << 1 µs) oder bei einem kontinuierlich emittierenden Laser (Dauerstrich-Laser, auch als cw-Laser bezeichnet) schnell, d.h. während einer Schaltzeit von deutlich weniger als 1 µs die Laseremission de- bzw. reaktiviert (bzw. in seiner Leistung wesentlich verändert) werden muss. In solchen Fällen muss ein verwendeter Modulationsmechanismus dazu in der Lage sein, nach dem Erscheinen eines Modulationssignals, das von einer Steuerelektronik bereitgestellt wird, innerhalb eines Zeitintervalls, das kleiner ist als der Pulsabstand, den Laser zu deaktivieren bzw. wieder zu aktivieren (oder in seiner Leistung wesentlich zu verändern).

Ein wesentlicher Aspekt ist dabei, dass bspw. in der Materialbearbeitung typischerweise eine hohe mittlere Leistung und/oder hohe Pulsenergie zur Verfügung stehen muss.

Das Modulationsprinzip muss demnach einen hohen Kontrast liefern und auch hochleistungstauglich und möglichst effizient sein.

Ein weiterer wesentlicher Aspekt ist, dass die Leistungsmodulation bzw. das De- oder Reaktivieren eines Laserpulses oder eines ganzen Pulszuges keine Rückwirkungen auf das verwendete Lasersystem haben darf, z.B. auf das Inversionsniveau des Laseroszillators oder des Laserverstärkers, welche unerwünschte und nicht kontrollierbare Leistungsschwankungen zur Folge haben würden.

Ähliche Dokumente wären :D1 BRIAN ANDERSON ET AL: "Comparison of phase modulation schemes for coherently combined fiber amplifiers", OPTICS EXPRESS, Bd. 23, Nr. 21, 19. Oktober 2015 (2015-10-19), Seite 27046, XP055477099, ISSN: 2161-2072, DOI: 10.1364/OE.23.027046 D2 US 2004/179764 A1 (MELIKECHI NOUREDDINE [US] ET AL) 16. September 2004 (2004-09-16) D3 US 5 424 863

A (GERTEL EITAN [US]) 13. Juni 1995 (1995-06-13) D4 Brian Anderson ET AL: "Comparison of phase modulation schemes for coherently combined fiber amplifiers", Optics Express, Bd. 23, Nr. 21, 19. Oktober 2015 (2015-10-19), Seite 27046, XP055477099, US ISSN: 2161-2072, DOI: 10.1364/OE.23.027046

Die meisten der aus dem Stand der Technik bekannten Ansätze zum Schalten bzw. zur Modulation von gepulster oder kontinuierlicher Laserstrahlung sind für Hochleistungsanwendungen bei gleichzeitig schnellen Schaltzeiten nicht verwendbar:
Bekannte mechanische Schalter besitzen eine inhärente Massenträgheit. Sie sind daher in ihrer Reaktionszeit auf 1 ms als Untergrenze beschränkt.

Bei einem akusto-optischen Modulator (AOM) als elektronisch steuerbarer optischer Schalter wird eine sich bewegende akustische Welle in einem Kristall (oft SiO₂ oder TeO₂) erzeugt, an der der Laserstrahl gebeugt wird. Da jedoch die zum Schalten genutzte akustische Welle den kompletten Strahlquerschnitt durchqueren muss, dieser allerdings nicht beliebig klein gewählt werden kann, um ein Erreichen der Zerstörschwelle des Materials zu vermeiden, vergeht typischerweise eine Schaltzeit von mehr als 1 µs. Trotz hoher Leistungsbeständigkeit und eines hohen Schaltkontrastes ist der AOM damit für viele Anwendungen zu träge. Außerdem übersteigt die Beugungseffizienz des AOMs selten 75%, was die Ausgangsleistung grundsätzlich herabsetzt.

Ein weiterer häufig verwendeter elektronisch gesteuerter optischer Schalter ist die Pockels-Zelle. Es handelt sich um eine spannungsgesteuerte Wellenplatte, welche ebenfalls schnell schalten kann. Dabei wird die Doppelbrechung des Materials der Wellenplatte durch ein Steuersignal im kV-Bereich so eingestellt, dass das Licht durch einen nachfolgenden Polarisationsstrahlteller ausgekoppelt und damit deaktiviert werden kann. Die dabei typischerweise verwendeten Kristalle (LiNbOs, KTP, BBO, RTP etc.) weisen jedoch den Nachteil einer nicht zu vernachlässigenden Restabsorption auf. Der damit verbundene Wärmeeintrag im Kristall führt zu einer Degradation der Qualität der emittierten Strahlung durch eine thermische Linsenwirkung. Pockels-Zellen sind daher nicht für höchste mittlere Leistungen (im Bereich von einigen 100 W bis einigen kW und darüber hinaus) geeignet.

Brian Anderson et al. ("Comparison of phase modulation schemes for coherently combined fiber amplifiers", Optics Express, Bd. 23, Nr. 21, 2015, S. 27046) beschreiben Methoden zur Phasenmodulation bei kohärent kombinierten Faserverstärkern. In einer Variante wird ein nicht polarisierender 50/50 Strahlteiler als Kombinationselement in einer Mach-Zehnder-artigen Anordnung verwendet. Zur Linienverbreiterung der Laserstrahlung kommt ein elektrooptischer Modulator zum Einsatz. Die so modulierte Strahlung wird auf zwei Strahlkanäle aufgeteilt, in denen sich wiederum einzelne Phasenmodulatoren und nachgeschaltete optische Verstärker befinden. Die Phasenmodulatoren werden mittels einer LOCSET-Technik dazu verwendet, eine Phasenstabilisierung bei der anschließenden kohärenten Kombination der Einzelstrahlen zu gewährleisten.

Aufgabe der Erfindung ist es vor diesem Hintergrund, ein Verfahren und eine entsprechende Vorrichtung bereitzustellen, mit der gepulste oder kontinuierliche Laserstrahlung sehr schnell amplitudenmoduliert, insbesondere geschaltet, d.h. deaktiviert und reaktiviert werden kann. Es soll ein hoher Schaltkontrast erzielt werden. Außerdem soll das Verfahren hochleistungstauglich sein, d.h. für eine mittlere Leistung der Laserstrahlung von mehr als 10 W, vorzugsweise deutlich darüber hinaus, d.h. mehr als 100 W bis über 1 kW, geeignet sein. Die Modulation soll wenig verlustbehaftet sein (hohe Effizienz).

Diese Aufgabe löst die Erfindung durch ein Verfahren nach Anspruch 1 und eine Vorrichtung nach Anspruch 10.

Gemäß der Erfindung wird die Laserstrahlung zunächst bei niedriger Leistung mittels eines geeigneten Lasersystems erzeugt. Die Laserstrahlung wird sodann auf wenigstens zwei Strahlkanäle aufgeteilt. Die Aufteilung auf wenigstens zwei Strahlkanäle bedeutet im Sinne der Erfindung, dass die Laserstrahlung auf wenigstens zwei räumlich separate Strahlwege aufgeteilt wird. In wenigstens einem der Strahlkanäle, vorzugsweise in allen Strahlkanälen, kann eine Verstärkung der in dem jeweiligen Strahlkanal propagierenden Laserstrahlung erfolgen. Hierzu kommen optische Verstärker an sich bekannter Art zum Einsatz. Nach der Verstärkung wird die in den Strahlkanälen propagierende Laserstrahlung hoher Leistung in einem Ausgangsstrahl oder auch in mehreren Ausgangsstrahlen kohärent kombiniert. Durch die Aufteilung der Laserstrahlung auf die wenigstens zwei Strahlkanäle und die nachfolgende kohärente Kombination wird, anders ausgedrückt, ein Interferometer realisiert, das z.B. nach Art eines Mach-Zehnder-Interferometers oder auch nach Art eines Michelson-Interferometers ausgebildet sein kann. Jeder der Strahlkanäle bildet dabei einen Interferometerzweig, wobei in wenigstens einem Interferometerzweig, vorzugsweise in allen Interferometerzweigen, eine Verstärkung der jeweils dort propagierenden Laserstrahlung erfolgen kann. Im Ausgangsstrahl wird die verstärkte Laserstrahlung kombiniert, wodurch es zu einer Addition der Strahlungsleistungen der Einzelstrahlen kommt.

Bei einer möglichen Ausgestaltung werden mehrere Ausgangsstrahlen erzeugt, wobei mindestens einer dieser Ausgangsstrahlen gemäß der Erfindung moduliert wird.

Die Erfindung basiert auf der Erkenntnis, dass die in den Strahlkanälen propagierende Laserstrahlung vor der Verstärkung hinsichtlich der relativen Phasenlage zeitlich moduliert werden kann. Hierfür kann ein Phasenmodulator (z.B. ein elektro-optischer Modulator, kurz EOM) verwendet werden, der nicht hochleistungstauglich ist.

Der Phasenmodulator ist erfindungsgemäß zur Amplitudenmodulation in die durch die Strahlkanäle gebildete Interferometer-Anordnung integriert. Die zeitliche Modulation, d.h. Änderung der relativen Phasenlage der in den Strahlkanälen, d.h. Interferometerzweigen propagierenden Strahlung bewirkt eine entsprechende Änderung des Interferenzzustands bei der kohärenten Kombination und damit eine Amplitudenmodulation im Ausgangsstrahl. Die Phasenmodulation (z.B. per EOM) ermöglicht entsprechend den oben ausgeführten Anforderungen hohe Schaltgeschwindigkeiten und schnelle Reaktionszeiten.

Die in den Strahlkanälen, d.h. vor der kohärenten Kombination angeordneten optischen Verstärker werden kontinuierlich mit Laserstrahlung konstanter mittlerer Leistung beaufschlagt. Nur die Phase variiert zeitlich durch die erfindungsgemäß aufgeprägte Modulation. Dies führt dazu, dass das Inversionsniveau in jedem optischen Verstärker zeitlich konstant bleibt. Damit weisen alle nutzbaren Laserpulse dieselbe Pulsenergie auf. Die erfindungsgemäße Amplitudenmodulation bewirkt keine unerwünschte Fluktuation der Leistung während der Verstärkung. Die nutzbaren Laserpulse sind diejenigen Laserpulse, die - korrespondierend zur Phasenmodulation - im Ausgangsstrahl konstruktiv interferieren.

Die Laserstrahlung wird erfindungsgemäß im Nanosekundenbereich (oder sogar schneller) ein- und ausgeschaltet bzw. moduliert, indem die Phase in der Weise moduliert wird, dass die Laserstrahlung der Einzelstrahlen im Ausgangsstrahl entweder vollständig konstruktiv oder vollständig destruktiv interferiert. Alternativ erfolgt eine kontinuierliche Amplitudenmodulation, indem durch die relative Phasenlage der Einzelstrahlen entsprechend eine nur teilweise konstruktive Interferenz im Ausgangsstrahl erzeugt wird.

Ein wesentlicher Vorteil der Erfindung ist, dass diese vollständig mit kommerziell verfügbaren Komponenten realisiert werden kann.

Die erfindungsgemäß eingesetzte kohärente Kombination der in den Strahlkanälen propagierenden Laserstrahlung lässt sich in zwei Klassen unterteilen, nämlich "filled aperture" (Überlagerung der Strahlen im Nah- und Fernfeld und "tiled aperture" (Überlagerung nur im Fernfeld). Der erfindungsgemäße Ansatz ist für beide Klassen anwendbar, wobei bevorzugt die "filled aperture"-Kombination eingesetzt wird, und zwar wegen der höheren Kombinations- bzw. Auslöschungseffizienz gegenüber dem "tiled aperture"-Prinzip.

Die Laserstrahlung kann gepulst sein mit beliebiger Pulsdauer und Pulsfrequenz. Die Laserstrahlung kann eine beliebige Wellenlänge aufweisen, soweit geeignete Komponenten verfügbar sind. Die Laserstrahlung kann auch Dauerstrich-Laserstrahlung (cw-Laserstrahlung) sein, die kontinuierlich emittiert wird.

Besonders eignet sich das erfindungsgemäße Verfahren zur Modulation von gepulster Laserstrahlung, d.h. von Laserstrahlung, die zeitlich äquidistante Laserpulse mit einer Pulsfrequenz von mehr als 1 kHz, bevorzugt mehr als 10 kHz, weiter bevorzugt mehr als 100 kHz, besonders bevorzugt mehr als 1 MHz umfasst. In sämtlichen genannten Frequenzbereichen ist eine pulsgenaue Modulation durch die Erfindung möglich.

Die erfindungsgemäße Modulationstechnik eignet sich besonders für hohe Leistungen. Die mittlere Leistung der erzeugten Laserstrahlung kann mehr als 10 W, bevorzugt mehr als 100 W, besonders bevorzugt sogar mehr als 1 kW betragen.

Bei einer bevorzugten Ausgestaltung des erfindungsgemäßen Verfahrens wird die relative Phasenlage der in den Strahlkanälen propagierenden Laserstrahlung geregelt. Hierzu kann ein weiteres Phasenstellglied dienen. Ebenso kann der zur Modulation verwendete Phasenmodulator (z.B. EOM) zur Regelung verwendet werden. die In einem realen System treten unvermeidlich Schwankungen der optischen Weglängen in den Strahlkanälen auf, z.B. aufgrund thermischer Ausdehnung. Dies führt zu einer fluktuierenden relativen Phasenlage der in den Strahlkanälen propagierenden Laserstrahlung am Ort der kohärenten Kombination. Daraus resultiert wiederum eine unerwünscht fluktuierende Leistung im Ausgangsstrahl. Durch die Regelung der relativen Phasenlage wird der Unterschied der optischen Weglängen in den Strahlkanälen stabilisiert. Damit ergibt sich trotz äußerer Einflüsse auf das System eine stabile Emission im Ausgangstrahl, und zwar auch bei maximaler Ausgangsleistung. Die Bandbreite der Regelung kann dabei (deutlich) kleiner sein als die Frequenz der erfindungsgemäßen zeitlichen Phasenmodulation. Die Fluktuationen aufgrund äußerer Einflüsse haben typischerweise eine deutlich kleinere Frequenz als die Modulationsfrequenz.

Die Regelung sollte so ausgelegt sein, dass sie nicht gegen die erfindungsgemäße Phasenmodulation arbeitet. Eine von der Phasenmodulation unabhängige Regelung würde (nach einer durch die Bandbreite der Regelung vorgegebenen Zeit) der Modulation entgegen wirken, sobald die durch die Modulation einzustellende relative Phasenlage der Laserstrahlung von dem Sollwert der Regelung abweicht.

Die zeitliche Modulation der relativen Phasenlage erfolgt zweckmäßig nach Maßgabe eines Modulationssignals. Das Modulationssignal ist ein von einem übergeordneten Steuersystem vorgegebenes Signal, das entweder direkt die einzustellende relative Phase oder die Amplitude des Ausgangsstrahls vorgibt. Im letzteren Fall ist das Modulationssignal entsprechend der durch das Modulationsprinzip vorgegebenen Beziehung zwischen Amplitude und relativer Phasenlage in ein Ansteuersignal für den verwendeten Phasenmodulator (z.B. EOM) umzusetzen. Bei Regelung der relativen Phasenlage sollte zweckmäßig der momentane Sollwert der Regelung in der Weise dem Modulationssignal nachgeführt werden, dass sichergestellt ist, dass die Regelung nicht gegen die gewünschte Modulation arbeitet. Ist die Modulationsfrequenz im Bereich oder kleiner der Bandbreite der Regelung zur Stabilisierung des Interferometers, so sollte der momentane Sollwert der Regelung der gemäß dem vorgegebenen Modulationssignal einzustellenden relativen Phasenlage entsprechen.

Bei einer bevorzugten Ausgestaltung des erfindungsgemäßen Verfahrens erfolgt die kohärente Kombination der in den Strahlkanälen propagierenden Laserstrahlung auf wenigstens zwei Ausgangsstrahlen. Dieser Ausgestaltung liegt die Überlegung zu Grunde, dass eine Vielzahl von Applikationen (z.B. in der Materialbearbeitung) eine flexible Aufteilung von Laserleistung auf einzelne räumlich getrennte Bearbeitungsstationen bzw. Ausgangsports erfordern. Dies kann sowohl die Anschaffungskosten reduzieren als auch die Produktivität und das Bearbeitungsspektrum der gesamten verwendeten Bearbeitungsanlage im Vergleich zur diskreten Bearbeitung mittels eines einzelnen Lasers an jeder Bearbeitungsstation deutlich erhöhen.

Die Realisierung einer Vorrichtung mit mehreren Ausgangsstrahlen gelingt erfindungsgemäß vorteilhaft über den Ansatz der kohärenten Kombination von mehreren (mindestens zwei) Strahlkanälen. Dies ist möglich für kontinuierliche als auch für gepulste Laserstrahlung. Die relative Phasenlage der Laserstrahlung der Einzelkanäle, welche kohärent überlagert werden, bestimmt dabei die Leistungsverteilung in die zwei oder mehr möglichen Ausgangsstrahlen. Mit anderen Worten wird die zeitliche Modulation der relativen Phasenlage der in den Strahlkanälen propagierenden Laserstrahlung durch die kohärente Kombination in eine zeitliche Modulation des Verhältnisses der Aufteilung der Leistung der in den Strahlkanälen propagierenden Laserstrahlung auf die Ausgangsstrahlen übertragen.

Auch bei dieser Ausgestaltung erfolgt zweckmäßig für eine stabile Ausgangsleistung eine Stabilisierung der relativen Phasenlage, um Schwankungen durch z. B. thermische oder akustische Störungen in den einzelnen Strahlkanälen zu kompensieren. Zum Umverteilen der Ausgangsleistung zwischen den Ausgangsstrahlen ist gemäß der Erfindung eine gezielte Veränderung der relativen Phasenlage zwischen den einzelnen Strahlkanälen nötig und, falls diese Umverteilung länger als es der Bandbreite der Stabilisierung entspricht aufrecht erhalten werden soll, ist ebenso eine Veränderung des Sollwertes der Stabilisierung der kohärenten Kombination erforderlich. Zur Stabilisierung der Ausgangsleistungsverteilung in den Ausgangsstrahlen entsprechend der Phasenlage der Laserstrahlung in den Strahlkanälen können konventionelle Methoden der Stabilisierung, wie beispielsweise LOCSET und Hänsch-Couillaud, verwendet werden.

Zweckmäßig wird bei dem zuvor beschriebenen Ausführungsbeispiel die in den Strahlkanälen propagierende Laserstrahlung in jedem der wenigstens zwei Ausgangsstrahlen unterschiedlich, d.h. in einer anderen Kombination kohärent überlagert, z.B. in der Weise, dass bei einer gegebenen Phasendifferenz zwischen zwei Strahlkanälen konstruktive Interferenz in einem ersten Ausgangsstrahl und destruktive Interfenz in einem zweiten Ausgangsstrahl vorliegt.

Im einfachsten Beispiel der Kombination von zwei Strahlkanälen erlaubt der zuvor beschriebene Ansatz die flexible Verteilung der Ausgangsleistung auf zwei Ausgangsstrahlen. Eine Veränderung der relativen Phasenlage um π (ausgehend von perfekter konstruktiver im ersten Ausgangsstrahl und perfekter destruktiver Interfenz im zweiten Ausgangsstrahl) verlagert die Ausgangsleistung vollständig in den zweiten Ausgangsstrahl und steht dort für Applikationen zur Verfügung. Alle Leistungswerte dazwischen sind durch entsprechende Wahl der Phasenlage ebenso einstellbar. Anzumerken ist, dass diese Methode die mögliche maximale Leistung der einzelnen Ausgangsstrahlen gegenüber der Emission eines einzelnen Lasers erhöht. Unter Annahme einer Kombinationseffizienz von 100% kann jeder Ausgangsstrahl zwischen 0% und 200% der Leistung der Einzelemission emittieren.

Je nach erforderlicher Geschwindigkeit der Umverteilung der Leistung auf die verschiedenen Ausgangsstrahlen können verschiedene Elemente zur Veränderung der relativen Phasenlage in den Strahlkanälen eingesetzt werden. Ein piezo-getriebener Spiegel in einer Verzögerungsstrecke erlaubt z.B. eine Veränderung der Leistungsverteilung im kHz-Bereich, ein elektro-optischer Modulator im GHz-Bereich, was eine pulsgenaue Umverteilung der Laserstrahlung auf verschiedene Ausgangsstrahlen erlaubt.

Ein konkretes Anwendungsszenario ist das Ausschalten der Laserstrahlung an einer oder mehreren Bearbeitungsstationen, um z.B. Werkstücke zu tauschen. Während dieser Umrüstzeit kann die Laserleistung auf andere Bearbeitungsstationen umgeleitet und entsprechend effektiv genutzt werden.

Des Weiteren wird die der Erfindung zu Grunde liegende Aufgabe bei einer Vorrichtung der eingangs genannten Art dadurch gelöst, dass wenigstens ein Phasenmodulator vorgesehen ist, der in einem der Strahlkanäle die in diesem Strahlkanal propagierende Laserstrahlung hinsichtlich der Phase zeitlich moduliert.

Als passive, wenig verlustbehaftete und leistungsbeständige Aufteilungs- und/oder Kombinationselemente eignen sich Polarisationsstrahlteiler (z.B. Dünnschichtpolarisatoren) oder Intensitätsstrahlteiler, wie sie in guter Qualität zu geringen Kosten kommerziell erhältlich sind. Diffraktive Elemente (z.B. Gitter) als Aufteilungs- und/oder Kombinationselemente sind ebenfalls denkbar.

Zweckmäßig weist die erfindungsgemäße Vorrichtung einen Regelkreis auf, der die relative Phasenlage der in den Strahlkanälen propagierenden Laserstrahlung regelt, um auf diese Weise, wie oben beschrieben, die optischen Weglängen in den Strahlkanälen bei unvermeidlich auftretenden äußeren Einflüssen zu stabilisieren. Der Regelkreis kann als Messeinrichtung zur Erfassung der relativen Phasenlage z.B. einen Hänsch-Couillaud-Detektor an sich bekannter Art umfassen. Als Stellglied kann der Regelkreis z.B. eine in einem der Strahlkanäle angeordnete (z.B. über Piezo-Aktoren) variable Verzögerungsstrecke aufweisen. Damit lässt sich die Regelung besonders einfach realisieren. Das Stellglied kann aber auch der Phasenmodulator selbst sein, wobei dann dem Phasenmodulator das Modulationssignal und, diesem überlagert, das Stellsignal des Reglers zugeführt werden.

Als Phasenmodulator zum schnellen Schalten kommt bevorzugt ein EOM zum Einsatz. Es sind EOMs kommerziell verfügbar, die Schaltzeiten im ns-Bereich aufweisen. Damit ist eine schnelle Amplitudenmodulation entsprechend den Anforderungen im Bereich der laserbasierten Materialbearbeitung (siehe oben) möglich. Ein für niedrige Leistungen ausgelegter EOM (z.B. faseroptischer EOM), der zu geringen Kosten am Markt verfügbar ist, kann erfindungsgemäß als Phasenmodulator verwendet werden.

Die erfindungsgemäße Vorrichtung ermöglicht das Deaktivieren bzw. Reaktivieren des Laserstrahls zwischen zwei Laserpulsen eines hoch repetierenden Kurzpulslasers. Die erfindungsgemäße Vorrichtung ermöglicht damit Schaltzeiten im Bereich von nur wenigen Nanosekunden. Entsprechend schnell kann, wie oben erläutert, auch kontinuierlich emittierte (cw) Laserstrahlung stufenlos moduliert werden.

Ein Ausführungsbeispiel der Erfindung wird im Folgenden anhand der Zeichnung näher erläutert. Es zeigt:
- Figur 1: eine schematische Darstellung einer erfindungsgemäßen Vorrichtung in einer ersten Ausgestaltung,
- Figur 2: eine schematische Darstellung einer erfindungsgemäßen Vorrichtung in einer zweiten Ausgestaltung mit einer Mehrzahl von Ausgangsstrahlen.

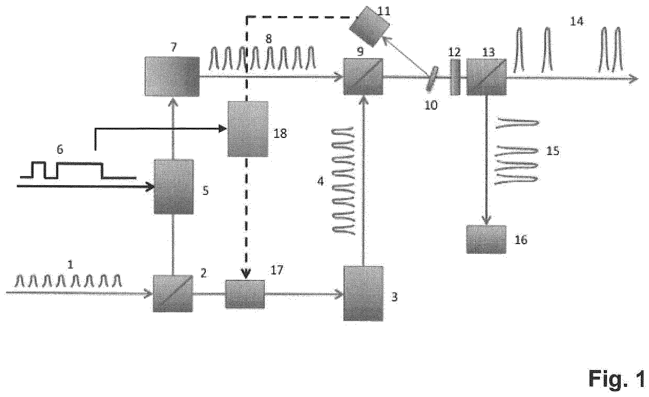

In Figur 1 wird ein Eingangspulszug 1 mittels eines (nicht dargestellten) Lasersystems erzeugt und mittels eines Aufteilungselementes 2 in Form eines Strahlteilers auf zwei (oder mehrere) Strahlkanäle aufgeteilt. In Figur 1 ist ein 1-auf-2 Strahlteiler (z.B. Polarisationsstrahlteiler) dargestellt. Denkbar sind auch Intensitätsstrahlteiler (z.B. 50/50 Strahlteiler, segmentierte Spiegel oder 1-auf-N-Strahlteiler, wie z.B. diffraktive Elemente). Durch kaskadierte Anordnung von 1-auf-2-Strahlteilern oder die Verwendung von 1-auf-N-Strahlteilern lassen sich mehr als zwei Strahlkanäle realisieren. Die räumlich separierten Pulszüge 4 und 8 durchlaufen optische Verstärker 3 und 7 bzw. Verstärkerketten zur Erzielung der gewünschten Leistung. In einem der Strahlkanäle befindet sich ein Phasenmodulator 5 (z.B. Pockelszelle / EOM), welcher dem Pulszug 8 ein zeitliches Phasenmuster aufprägt. Dieses wird durch eine externes Modulationssignal in Form einer Steuerspannung 6 vorgegeben. Das Phasenmuster bestimmt erfindungsgemäß die Modulationstiefe der Amplitudenmodulation. An einem Kombinationselement 9 wird die in den Strahlkanälen propagierende Laserstrahlung 4, 8 in einem einzigen Ausgangsstrahl kohärent überlagert. Dabei ist wesentlich, dass der optische Wegunterschied der Strahlkanäle kleiner, vorzugsweise deutlich kleiner als die Kohärenzlänge der Laserstrahlung ist.

Bei der anhand des Ausführungsbeispiels der Figur 1 erläuterten Polarisationskombination ist das Kombinationselement 9 ein polarisierendes Element (z.B. Polarisationsstrahlteiler oder Dünnschichtpolarisator). Bei der Überlagerung am Kombinationselement 9 vereint sich vorerst die gesamte Strahlungsleistung des p-polarisierten Strahles im ersten Strahlkanal (Pulszug 8) und die gesamte Leistung des s-polarisierten Strahls im zweiten Strahlkanal (Pulszug 4) zu einem Ausgangsstrahl. Ist die relative Phasenlage der in den beiden Strahlkanälen propagierenden Laserstrahlung 4, 8 gleich Null (oder ein ganzzahliges Vielfaches von 2π), dann ist die Interferenz maximal konstruktiv und die Ausgangsstrahlung durch eine lineare Polarisation gekennzeichnet, wobei die Orientierung der Polarisation um 45° geneigt ist. Eine Wellenplatte 12 dient nun dazu, die Orientierung auf p-Polarisation eines nachfolgenden Polarisators 13 (ein beliebiges polarisierendes Element, z.B. ein Gitterkompressor mit polarisationsabhängiger Transmission) zu drehen. Dieser Zustand bedeutet eine maximale Amplitude der Laserstrahlung im Ausgangsstrahl. Verändert sich die relative Phasenlage der Laserstrahlung in den beiden Strahlkanälen durch die Phasenmodulation, reduziert sich die konstruktive Interferenz und entsprechend die Amplitude im Ausgangsstrahl. Darauf basiert das erfindungsgemäße Prinzip der Amplitudenmodulation. Wird auf den nachfolgenden Polarisator 13 verzichtet, so kann der beschriebene Aufbau zwar nicht zur pulsgenauen Modulation der Amplitude, jedoch zur pulsgenauen Modulation des Polarisationszustandes genutzt werden.

Unter realen Bedingungen treten Schwankungen der optischen Weglänge in den Strahlkanälen auf, was zu einem entsprechend fluktuierenden Polarisationszustand und damit zu einer fluktuierenden Leistung im Ausgangsstrahl führt. Daher wird bei dem Ausführungsbeispiel der Figur 1 ein Bruchteil des kombinierten Laserstrahls durch einen Strahlteiler 10 auf einen Hänsch-Couillaud-Detektor (HCD) 11 gelenkt. Dieser analysiert den Polarisationszustand und damit die relative Phasenlage der in den beiden Strahlkanälen propagierenden Laserstrahlung 4, 8. Der HCD 11 wird zur Erzeugung eines Fehlersignals genutzt, welches zur Regelung und damit zur Stabilisierung des optischen Weglängenunterschiedes der Strahlkanäle herangezogen wird.

Der zur Stabilisierung des Interferometers vorgesehenen Regelung muss jeweils die gemäß der Steuerspannung 6 durch den Phasenmodulator 5 eingestellte relative Phasenlage als Regelungssollwert vorgegeben werden. Dies ist insbesondere wichtig, wenn eine größere Anzahl von Laserpulsen abgeschwächt werden sollen. Die Reaktionszeit der Regelung ist durch die Geschwindigkeit des Stellgliedes 17 bestimmt. Falls das Stellglied 17 z.B. ein EOM ist, kann die Reaktionszeit im Bereich von Nanosekunden liegen, falls das Stellglied 17 z.B. durch einen piezo-getriebenen Spiegel in einer Verzögerungsstrecke realisiert wird, ergeben sich Reaktionszeiten im ms-Bereich. Dieser weite Bereich der Reaktionszeit ist tolerabel, da intrinsische Phasenfluktuationen aufgrund äußerer Einflüsse langsam sind (typ. im Bereich von 1000 Hz oder weniger).

Das Fehlersignal wird bei dem Ausführungsbeispiel einem Regler 18 zugeführt, der die relative Phasenlage der in den Strahlkanälen propagierenden Laserstrahlung regelt. Als Stellglied 17 dient bei dem Ausführungsbeispiel ein separates Element, wie z.B. ein piezo-getriebener Spiegel in einer Verzögerungstrecke in einem der beiden Strahlkanäle. Alternativ könnte das Fehlersignal auch direkt dem Phasenmodulator 5 zugeführt, wobei das Fehlersignal der Steuerspannung 6 geeignet überlagert wird. Die Steuerspannung 6 wird außerdem dem Regler 18 zugeführt. Die Steuerspannung 6 gibt dem Regler 18 den momentanen Sollwert für die Regelung der relativen Phasenlage ab.

Damit ergibt sich trotz äußerer Einflüsse auf das System eine stabile Emission am Ausgang. Die relative Phasenlage ist auf den durch die Steuerspannung 6 vorgegebenen Sollwert stabilisiert.

Wie oben erläutert, führt eine Veränderung der relativen Phasenlage der Laserstrahlung in den Strahlkanälen in der Weise, dass keine maximal konstruktive Interferenz mehr vorliegt, zu einer Reduktion der Amplitude im Ausgangsstrahl. Beträgt der Phasenunterschied π (bzw. 3π, 5 π, usw.), ergibt sich wiederum eine lineare Polarisation der Laserstrahlung hinter dem Kombinationselement 9, wobei die Orientierung der Polarisation um 90° verdreht ist (verglichen mit der Situation ohne Phasenunterschied). Demzufolge ergibt sich bei unveränderter Stellung der Wellenplatte 12 am Polarisator 13 eine komplette Auslöschung. Die Amplitude sinkt auf einen Minimalwert.

Für eine schnelle (pulsgenaue) Veränderung der Amplitude werden die entsprechenden Phasensprünge durch den Phasenmodulator 5 aufgeprägt. Laserpulse, die keine zusätzliche Phase aufgeprägt bekommen, stehen als Nutzstrahlung 14 im Ausgangsstrahl zur Verfügung. Pulse mit zusätzlich aufgeprägter Phase werden abgeschwächt, so dass sie teilweise bzw. bei einem Phasensprung von π vollständig am Polarisator 13 abgelenkt werden und einen abgezweigten Pulszug 15 bilden, welcher anderweitig genutzt werden kann oder in einer Strahlfalle 16 absorbiert wird.

Der erfindungsgemäße Ansatz ist auch mit mehr als zwei Strahlkanälen realisierbar, wobei entweder mehrere Phasenmodulatoren verwendet werden oder bei einer kaskadierten Aufteilung der Laserstrahlung auf die Strahlkanäle beispielsweise nach der ersten 1-auf-2-Aufteilung die Phase in einem Strahlkanal moduliert und anschließend die modulierte Laserstrahlung auf weitere Strahlkanäle aufgeteilt wird. Auch ist eine asymmetrische Aufteilung denkbar, bei der beispielsweise die Laserstrahlung auf einen phasenmodulierten, leistungsstärkeren und mehrere nicht modulierte, leistungsschwächere Strahlkanäle aufgeteilt wird.

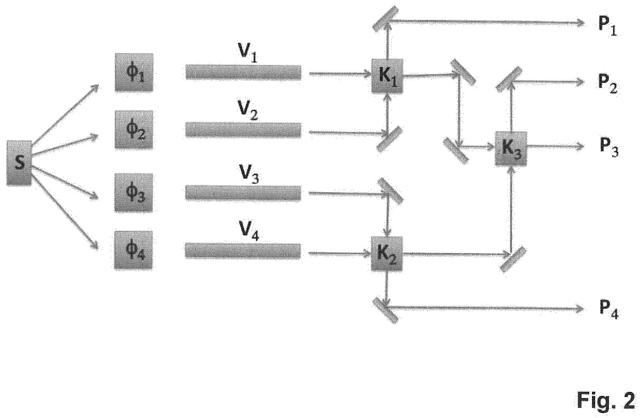

Bei dem Ausführungsbeispiel der Figur 2 wird die Laserstrahlung einer nicht dargestellten Signalquelle (z.B. Laseroszillator oder Vorverstärkersystem) über einen Strahlteiler S als Aufteilungselement auf mehrere Strahlkanäle aufgeteilt. Bei dem Ausführungsbeispiel befindet sich in jedem der vier Strahlkanäle ein optischer Verstärker V₁-V₄. Vor jedem der Verstärker befindet sich ein Phasenmodulator Φ₁-Φ₄, z.B. ein elektro-optischer Modulator. Als Kombinationselement dient die dargestellte Anordnung aus Spiegeln und Strahlkombinierern K₁-K₃ (z.B. teilreflektierende Spiegel oder Polarisationsstrahlteiler). Die Erfindung ermöglicht die Nutzung aller vier Ausgangsstrahlen P₁ -P₄, in denen die in den Strahlkanälen propagierende Laserstrahlung mittels der Spiegel und Strahlkombinierer K₁-K3 kohärent überlagert wird. Je nach Phasenlage der Phasenmodulatoren Φ₁-Φ₄ ergibt sich eine Leistungsverteilung auf die vier Ausgangsstrahlen P₁-P₄ von jeweils 0-200 % und auf P₂ und P₃ sogar von 0-400 %, bezogen auf die Leistung eines einzelnen Strahlkanals.

Auch bei dem Ausführungsbeispiel der Figur 2 sollte in der Praxis eine Regelung der Phasenlage der in den Strahlkanälen propagierenden Laserstrahlung vorgesehen sein, um Schwankungen aufgrund von Umgebungseinflüssen (thermische und akustische Störungen) zu kompensieren, entsprechend dem Ausführungsbeispiel der Figur 1. Diese Regelung ist in der Fig. 2 nicht dargestellt.

Der in Figur 2 illustrierte Ansatz kann auf eine beliebige Zahl *N* von Strahlkanälen und *M* Ausgangsstrahlen erweitert werden, wobei *M* zwischen 2 und *N* liegen kann.

## Patentansprüche

1. Verfahren zur Amplitudenmodulation von Laserstrahlung, mit den Verfahrensschritten:
- Erzeugen von Laserstrahlung,
- Aufteilung der Laserstrahlung auf wenigstens zwei Strahlkanäle, und
- kohärente Kombination der in den Strahlkanälen propagierenden Laserstrahlung in wenigstens einem Ausgangsstrahl,
**dadurch gekennzeichnet, dass** die in den Strahlkanälen propagierende Laserstrahlung hinsichtlich der relativen Phasenlage zeitlich moduliert wird, so dass der Ausgangsstrahl hinsichtlich der Amplitude zeitlich moduliert wird, wobei eine Verstärkung der in wenigstens einem der Strahlkanäle propagierenden Laserstrahlung erfolgt, wobei die in den Strahlkanälen propagierende Laserstrahlung vor der Verstärkung hinsichtlich der relativen Phasenlage nach Maßgabe eines von einem übergeordneten Steuersystem vorgegebenen Modulationssignals zeitlich in der Weise moduliert wird, dass
- ein Ein- und Ausschalten der Laserstrahlung im Nanosekundenbereich erfolgt, indem die Laserstrahlung der in den Strahlkanälen propagierenden Laserstrahlung im Ausgangsstrahl entweder vollständig konstruktiv oder vollständig destruktiv interferiert oder
- eine kontinuierliche Amplitudenmodulation im Nanosekundenbereich erfolgt, indem durch die relative Phasenlage der in den Strahlkanälen propagierenden Laserstrahlung eine nur teilweise konstruktive Interferenz im Ausgangsstrahl erzeugt wird.

2. Verfahren nach Anspruch 1, **dadurch gekennzeichnet, dass** die relative Phasenlage der in den Strahlkanälen propagierenden Laserstrahlung geregelt wird.

3. Verfahren nach Anspruch 2, **dadurch gekennzeichnet, dass** die Bandbreite der Regelung kleiner ist als die Frequenz der zeitlichen Phasenmodulation.

4. Verfahren nach Anspruch 2 oder 3, **dadurch gekennzeichnet, dass** der Sollwert der Regelung aus dem Modulationssignal abgeleitet wird.

5. Verfahren nach einem der Ansprüche 1 bis 4, **dadurch gekennzeichnet, dass** die kohärente Kombination im Fernfeld erfolgt.

6. Verfahren nach Anspruch 5, **dadurch gekennzeichnet, dass** die kohärente Kombination auch im Nahfeld erfolgt.

7. Verfahren nach einem der Ansprüche 1 bis 6, **dadurch gekennzeichnet, dass** die kohärente Kombination der in den Strahlkanälen propagierenden Laserstrahlung auf wenigstens zwei Ausgangsstrahlen erfolgt.

8. Verfahren nach Anspruch 7, **dadurch gekennzeichnet, dass** die in den Strahlkanälen propagierende Laserstrahlung (4, 8) in jedem der wenigstens zwei Ausgangsstrahlen in einer anderen Kombination kohärent überlagert wird.

9. Verfahren nach Anspruch 7 oder 8, **dadurch gekennzeichnet, dass** die zeitliche Modulation der relativen Phasenlage der in den Strahlkanälen propagierenden Laserstrahlung durch die kohärente Kombination in eine zeitliche Modulation des Verhältnisses der Aufteilung der Leistung der in den Strahlkanälen propagierenden Laserstrahlung auf die Ausgangsstrahlen umgesetzt wird.

10. Vorrichtung zur Erzeugung amplitudenmodulierter Laserstrahlung, mit
- einem Aufteilungselement (2), das einen Laserstrahl (1) auf wenigstens zwei Strahlkanäle aufteilt,
- einem Kombinationselement (9), das die in den Strahlkanälen propagierende Laserstrahlung (4, 8) in wenigstens einem Ausgangsstrahl (14) kohärent überlagert,
**gekennzeichnet durch** wenigstens einen Phasenmodulator (5), der in einem der Strahlkanäle die in dem Strahlkanal propagierende Laserstrahlung nach Maßgabe eines von einem übergeordneten Steuersystem vorgegebenen Modulationssignals hinsichtlich der Phase zeitlich moduliert, wobei wenigstens ein optischer Verstärker (3, 7) vorgesehen ist, der die Laserstrahlung in einem der Strahlkanäle verstärkt, wobei der Phasenmodulator (5) dem optischen Verstärker (7) vorgeschaltet ist, und wobei die Vorrichtung zur Durchführung des Verfahrens nach einem der Ansprüche 1 bis 9 eingerichtet ist.

11. Vorrichtung nach Anspruch 10, **gekennzeichnet durch** einen Regelkreis mit einem Regler (18), der die relative Phasenlage der in den Strahlkanälen propagierenden Laserstrahlung (4, 8) regelt.

12. Vorrichtung nach Anspruch 11, **dadurch gekennzeichnet, dass** der Regler (18) den Sollwert der Regelung aus dem Modulationssignal (6) ableitet.

13. Vorrichtung nach einem der Ansprüche 10 bis 12, **dadurch gekennzeichnet, dass** das Kombinationselement (9) die in den Strahlkanälen propagierende Laserstrahlung (4, 8) in wenigstens zwei Ausgangsstrahlen kohärent überlagert.

14. Vorrichtung nach Anspruch 13, **dadurch gekennzeichnet, dass** das Kombinationselement (9) die in den Strahlkanälen propagierende Laserstrahlung (4, 8) in jedem der wenigstens zwei Ausgangsstrahlen in einer anderen Kombination kohärent überlagert.

15. Vorrichtung nach Anspruch 13 oder 14, **dadurch gekennzeichnet, dass** das Kombinationselement (9) die zeitliche Modulation der relativen Phasenlage der in den Strahlkanälen propagierenden Laserstrahlung (4, 8) in eine zeitliche Modulation des Verhältnisses der Aufteilung der Leistung der in den Strahlkanälen propagierenden Laserstrahlung (4, 8) auf die Ausgangsstrahlen umsetzt.

## Claims

1. Method for amplitude modulation of laser radiation, comprising the process steps:
- Generation of laser radiation,
- splitting the laser radiation into at least two beam channels, and
- coherent combination of the laser radiation propagating in the beam channels in at least one output beam,
**characterized in that**
the laser radiation propagating in the beam channels is temporally modulated with respect to the relative phase position, so that the output beam is modulated in time with respect to the amplitude, wherein amplification of the laser radiation propagating in at least one of the beam channels takes place, wherein the laser radiation propagating in the beam channels is prior to amplification with respect to the relative phase position in accordance with a modulation signal preset by a higher-level control system modulated in time in such a way that
- a switch on and off of the laser radiation in the nanosecond range takes place **in that** the laser radiation propagating in the beam channels interferes in the output beam either completely constructively or completely destructively or
- a continuous amplitude modulation in the nanosecond range takes place in that by means of the relative phase position of the laser radiation propagating in the beam channels an only partial constructive interference in the output beam is generated.

2. Method according to claim 1, **characterized in that** the relative phase position of the laser radiation propagating in the beam channels is controlled.

3. Method according to claim 2, **characterized in that** the bandwidth of the control is smaller than the frequency of the temporal phase modulation.

4. Method according to claim 2 or 3, **characterized in that** the setpoint of the control is derived from the modulation signal.

5. Method according to any one of claims 1 to 4, **characterized in that** the coherent combination takes place in the far field.

6. Method according to claim 5, **characterized in that** the coherent combination also takes place in the near field.

7. Method according to any one of claims 1 to 6, **characterized in that** the coherent combination of the laser radiation propagating in the beam channels takes place on at least two output beams.

8. Method according to claim 7, **characterized in that** the laser radiation (4, 8) propagating in the beam channels is coherently superimposed in each of the at least two output beams in a different combination.

9. Method according to claim 7 or 8, **characterized in that** the temporal modulation of the relative phase position of the laser radiation propagating in the beam channels is converted by the coherent combination into a temporal modulation of the ratio of the division of the power of the laser radiation propagating in the beam channels onto the output beams.

10. Device for generating amplitude-modulated laser radiation, with
- a splitting element (2) which splits a laser beam (1) into at least two beam channels,
- a combining element (9) which superimposes coherently the laser radiation (4, 8), which is propagating in the beam channels, in at least one output beam (14),
**characterized by**
at least one phase modulator (5) which, in one of the beam channels, temporally with regard to phase modulates the laser radiation propagating in the beam channel in accordance with a modulation signal preset by a higher-level control system, wherein at least one optical amplifier (3, 7) is provided which amplifies the laser radiation in one of the beam channels, wherein the phase modulator (5) is connected upstream of the optical amplifier (7), and wherein the device is set up to carry out the method according to any one of claims 1 to 9.

11. Device according to claim 10, **characterized by** a control circuit with a controller (18) which regulates the relative phase position of the laser radiation propagating in the beam channels.

12. Device according to claim 11, **characterized in that** the controller (18) derives the setpoint of the control from the modulation signal (6).

13. Device according to any one of claims 10 to 12, **characterized in that** the combining element (9) coherently superimposes the laser radiation (4, 8) propagating in the beam channels in at least two output beams.

14. Device according to claim 13, **characterized in that** the combining element (9) coherently superimposes the laser radiation propagating in the beam channels (4, 8) in each of the at least two output beams in a different combination.

15. Device according to claim 13 or 14, **characterized in that** the combining element (9) converts the temporal modulation of the relative phase position of the laser radiation (4, 8) propagating in the beam channels into a temporal modulation of the ratio of the division of the power of the laser radiation (4, 8) propagating in the beam channels to the output beams.

## Revendications

1. Procédé de modulation d'amplitude d'un rayonnement laser, comprenant les étapes du procédé:
- Génération d'un rayonnement laser,
- répartition du rayonnement laser sur au moins deux canaux de faisceau, et
- combinaison cohérente du rayonnement laser se propageant dans les canaux de faisceau dans au moins un faisceau de sortie,
**caractérisé en ce que**
le rayonnement laser se propageant dans les canaux de faisceau est modulé dans le temps en ce qui concerne la position de phase relative, de sorte que le faisceau de sortie est modulé dans le temps en ce qui concerne l'amplitude, une amplification du rayonnement laser se propageant dans au moins l'un des canaux de faisceau étant effectuée, le rayonnement laser se propageant dans les canaux de faisceau est modulé dans le temps, avant l'amplification, en fonction de la position relative des phases, en fonction d'un signal de modulation prescrit par un système de commande supérieur, de telle manière que
- l'allumage et l'extinction du rayonnement laser dans le domaine de la nanoseconde est réalisée, en faisant interférer le rayonnement laser se propageant dans les canaux de faisceau dans le faisceau de sortie soit de manière totalement constructive, soit de manière totalement destructive ou
- une modulation d'amplitude continue dans le domaine de la nanoseconde est réalisée, en générant une interférence constructive seulement partielle dans le faisceau de sortie grâce à la position de phase relative du rayonnement laser se propageant dans les canaux du faisceau.

2. Procédé selon la revendication 1, **caractérisé en ce que** la position de phase relative du rayonnement laser se propageant dans les canaux du faisceau est régulée.

3. Procédé selon la revendication 2, **caractérisé en ce que** la largeur de bande de la régulation est inférieure à la fréquence de la modulation de phase dans le temps.

4. Procédé selon la revendication 2 ou 3, **caractérisé en ce que** la valeur de consigne de la régulation est dérivée du signal de modulation.

5. Procédé selon l'une des revendications 1 à 4, **caractérisé en ce que** la combinaison cohérente est réalisée en champ lointain.

6. Procédé selon la revendication 5, **caractérisé en ce que** la combinaison cohérente s'effectue également dans le champ proche.

7. Procédé selon l'une des revendications 1 à 6, **caractérisé en ce que** la combinaison cohérente du rayonnement laser se propageant dans les canaux de faisceau est effectuée sur au moins deux faisceaux de sortie.

8. Procédé selon la revendication 7, **caractérisé en ce que** le rayonnement laser (4, 8), qui se propage dans les canaux de faisceau, dans chacun des au moins deux faisceaux de sortie est superposé de manière cohérente dans une combinaison différente.

9. Procédé selon la revendication 7 ou 8, **caractérisé en ce que** la modulation dans le temps de la position de phase relative du rayonnement laser, qui se propage dans les canaux de faisceau, à travers la combinaison cohérente en une modulation temporelle du rapport de la répartition de la puissance du rayonnement laser, qui se propage dans les canaux de faisceau, est convertie sur les faisceaux de sortie.

10. Dispositif de génération de rayonnement laser modulé en amplitude, avec
- un élément de division (2), qui divise un faisceau laser (1) en au moins deux canaux de faisceau,
- un élément de combinaison (9), qui superpose de manière cohérente le rayonnement laser (4, 8), qui se propage dans les canaux de faisceau, dans au moins un faisceau de sortie (14),
**caractérisé par**
au moins un modulateur de phase (5) qui, dans l'un des canaux de faisceau, modifie la phase dans le temps du rayonnement laser, qui se propage dans le canal des faisceau, en fonction d'un signal de modulation prédéfini par un système de commande supérieur, au moins un amplificateur optique (3, 7) étant prévu, qui amplifie le rayonnement laser dans l'un des canaux de rayonnement, le modulateur de phase (5) étant monté en amont de l'amplificateur optique (7), et le dispositif étant conçu pour la mise en oeuvre du procédé selon l'une des revendications 1 à 9.

11. Dispositif selon la revendication 10, **caractérisé par** un circuit de régulation avec un régulateur (18) qui règle la position de phase relative du rayonnement laser (4, 8) se propageant dans les canaux de faisceau.

12. Dispositif selon la revendication 11, **caractérisé en ce que** le régulateur (18) dérive la valeur de consigne de la régulation à partir du signal de modulation (6).

13. Dispositif selon l'une des revendications 10 à 12, **caractérisé en ce que** l'élément de combinaison (9) superpose de manière cohérente le rayonnement laser (4, 8) se propageant dans les canaux de faisceau en au moins deux faisceaux de sortie.

14. Dispositif selon la revendication 13, **caractérisé en ce que** l'élément de combinaison (9) superpose de manière cohérente le rayonnement laser (4, 8), qui se propage dans les canaux de rayonnement, dans chacun des au moins deux faisceaux de sortie dans une autre combinaison.

15. Dispositif selon la revendication 13 ou 14, **caractérisé en ce que** l'élément de combinaison (9) transforme de moduler dans le temps la position du phase relative du rayonnement laser (4, 8) se propageant dans les canaux de rayonnement en une modulation dans le temps du rapport de la répartition de la puissance du rayonnement laser (4, 8) se propageant dans les canaux de faisceau sur les faisceaux de sortie.
